# EUROPÄISCHE PATENTSCHRIFT

(11) **EP 1 503 835 B1**
(45) Veröffentlichungstag und Bekanntmachung des Hinweises auf die Patenterteilung: **04.08.2010**
(21) Anmeldenummer: 03717206.1
(22) Anmeldetag: 12.03.2003
(51) Int. Cl.: B01D 1/00

(54) **KASSETTENFILTER ZUR REINIGUNG VON GASEN**
CARTRIDGE FILTER FOR PURIFYING GASES
FILTRE A AIR CELLULAIRE DESTINE A L'EPURATION DE GAZ

(30) Priorität: 15.05.2002 DE 10221807
(43) Veröffentlichungstag der Anmeldung: 09.02.2005
(73) Patentinhaber: Carl Freudenberg KG, 69469 Weinheim (DE)
(72) Erfinder: CAESAR, Thomas, 69181 Leimen (DE); TAPPER, Renate, 64625 Bensheim (DE); SCHROTH, Thomas, 67240 Bobenheim (DE)
(86) Internationale Anmeldenummer: PCT/EP2003/002523
(87) Internationale Veröffentlichungsnummer: WO 2003/097201

(56) Entgegenhaltungen:
- EP-B- 0 301 129
- DE-C- 4 229 135
- DE-U- 9 301 754
- US-A- 5 840 094
- US-A- 6 059 966

## Beschreibung

### Technisches Gebiet

Die Erfindung betrifft einen Kassettenfilter, als Fein- oder Schwebstofffilter, zur Reinigung von Gasen mit einem Rahmen in den ein oder mehrere von dem Gas durchströmte Faltenpakete aus einem Filtermaterial eingefügt sind, wobei die Endstücke der Rahmenleisten über Eckverbinder miteinander verbunden sind.

Bei Betrieben in denen Reinlufträume vorhanden sind, werden sehr hohe Anforderungen an die Reinheit der Raumluft gestellt. Eine von Staub und Mikroorganismen gereinigte Luft ist erforderlich, um die gewollte Luftreinheit aufrechtzuerhalten. Neben Filtermatten und Taschenfiltern sind sogenannte Kassettenfilter eine gängige Bauform von Luftfiltern. Eine übliche Bauform von Kassettenfiltern hat ein senkrecht zur Strömungsrichtung ausgerichtetes Faltenpaket mit einem äußeren Rahmen. Faltenpaket und Rahmen werden gegeneinander über ein Dichtmaterial abgerichtet. Die Faltenpakete selbst werden aus zick-zack-förmig gefaltetem Filterpapier gebildet. Bei Schwebstoffen kommen als Dichtmaterial meist flüssig zu verarbeitende Kunststoffe zum Einsatz. Bei Feinfiltern kann als Dichtmaterial auch ein Filtervlies eingelegt werden.

Der äußere Rahmen gibt dem Filter die erforderliche mechanische Stabilität, schützt das Faltenpaket vor Beschädigungen und erlaubt den dichtsitzenden Einbau des Filterelements in eine Aufnahmevorrichtung. Die einzelnen Filterrahmen werden aus vier Rahmenleisten zusammengefügt, wobei zusätzlich auch Eckverbinder eingesetzt werden können.

Die Kassettenfilter werden von den Kunden in nahezu beliebigen Abmessungen und Ausführungsvarianten nachgefragt. Dieses führt zu einer sehr kostenintensiven Einzelfertigung, insbesondere der Rahmenleisten, da für jede Abmessung ein eigenes Tiefzieh- oder Gießwerkzeug benötigt wird.

### Stand der Technik

In der DE 195 45 064 A1 ist ein Filtereinsatz beschrieben, der als Kassettenfilter bezeichnet werden kann. Der Filtereinsatz besteht aus einem Filterrahmen und einem Faltenpack, wobei letzterer durch eine Dichtung entlang seines Außenumfangs gasdicht im Filterrahmen angeordnet ist.

Die DE 195 45 046 C2 zeigt die Ausbildung eines Faltenpacks wie er in einen Kassettenfilter eingesetzt werden kann.

In der EP 0 301 129 B1, der US 5,840,094 A und der US 6,059,966 A sowie der DE 93 01 754 U1 und DE 42 29 135 C1 sind weitere Filterrahmen dargestellt. Eine variierbare Filtertiefe ist in keiner dieser Schriften angesprochen.

In der nicht vorveröffentlichten DE 101 37 926.9 ist ein Kassettenfilter behandelt, bei den der Rahmen aus Profilleisten gleichen Aufbaus und aus die Profilleisten an ihren Endstücken erfassenden Eckverbindern besteht. Dieser Kassettenfilter hat den Vorteil, dass der Rahmen mit sehr unterschiedlichen Abmessungen auf einfachste Weise gefertigt werden kann. Der Rahmen kann aus Profilleisten, aus abgelängten Teilstücken eines endlos gefertigten Strangprofils in beliebiger Größe zusammengesetzt werden. Das heißt, Höhe und Breite des Rahmens sind bei einer vorgegebenen Form einer Profilleiste beliebig variierbar. Die Tiefe des Kassettenfilters, das heißt, das Maß von der Einströmseite bis zur Ausströmseite der Luft, ist jedoch durch die Breite der Profilleiste vorgegeben.

### Darstellung der Erfindung

Der Erfindung liegt die Aufgabe zu Grunde, einen Kassettenfilter so weiterzubilden, dass auch die Tiefe des Filters variierbar ist. Dabei soll die Herstellung des Kassettenfilters weiterhin möglichst einfach und kostengünstig bleiben.

Die Lösung der gestellten Aufgabe wird bei einem Kassettenfilter der eingangs genannten Art erfindungsgemäß dadurch erreicht, dass die Rahmenleisten des Kassettenfilters aus mindestens zwei quer zur Strömungsrichtung des Gases ausgerichteten und formschlüssig ineinander greifenden und/oder miteinander verbindbaren Einzelteilen bestehen. Mit anderen Worten, die Rahmenleisten bestehen in Strömungsrichtung der Gase aus mehreren Einzelteilen die zu einem Gesamtrahmen zusammenzusetzen sind. Damit entsteht eine Art Baukastensystem, welches aus Rahmenleisten und Eckverbindern unterschiedlicher Größe besteht, die zu beliebigen Kassettenfiltern zusammengesetzt werden können. Hierdurch ergibt sich eine erhebliche Einsparung an der Anzahl der benötigten Werkzeuge für die Herstellung der Filterrahmen.

Die aneinander anliegenden Einzelteile der Rahmenleisten werden von den Eckverbindern zusätzlich erfasst und gehalten. Dadurch wird den geteilten Rahmenleisten eine höhere Eigenstabilität zuteil.

Für die Stabilität des Rahmens ist es günstig, wenn seine Einzelteile doppelwandig aus zwei mit Abstand zueinander liegenden Wänden gebildet werden. Die Wände der Einzelteile können zusätzlich durch längs der Einzelteile verlaufende Querstege miteinander verbunden sein.

Als vorteilhaft können Eckverbinder eingesetzt werden, die mit zwischen die Wände der Einzelteile greifende und an den Wänden und/oder Querstegen anliegenden Zungen ausgestattet sind. Einen besonderen Halt ergeben die Eckverbinder, wenn sie paarweise ineinander steckbar sind.

Die formschlüssige Verbindung der Einzelteile zu Rahmenleisten kann durch eine längs der Anschlussränder der Einzelteile verlaufende Steckverbindung erfolgen. Diese Steckverbindung kann sehr unterschiedlich ausgebildet sein. Eine Möglichkeit besteht darin, dass die Steckverbindung durch eine hakenförmig ineinander greifende Ausbildung der Anschlussränder zweier benachbarter Einzelteile hergestellt ist. Die Steckverbindung kann aber auch durch eine nut- und federartige Ausbildung der Anschlussränder zweier benachbarter Einzelteile gebildet werden. Bei der Ausbildung der Steckverbindung ist darauf zu achten, dass eine möglichst stabile Verbindung zwischen den beiden Einzelteilen hergestellt wird. Bei einfacheren Ausführungsformen von Rahmen sind auch Steckverbindungen möglich, bei denen beispielsweise ein Anschlussrand mit einer Rille und der gegenüberliegende Anschlussrand mit einem in die Rille einfügbaren Profil ausgebildet ist.

Um die Einbringung von Dichtmaterial sei es flüssig oder in Vliesstoffform bei der Befestigung des Faltenpakets im Rahmen zu erleichtern, sind die Rahmenleisten an ihren Längsseiten mit nach innen gerichteten Abwinklungen versehen. Diese Abwinklungen verhindern, dass beispielsweise flüssiges Material während der Fertigung aus dem Rahmen auslaufen kann.

Die Fertigung der Einzelteile für die Rahmenleisten wird bevorzugt durch Ablängen von Teilstücken aus endlos gefertigten Strangprofilen hergestellt. Die Strangprofile können sehr unterschiedlicher Bauart sein.

### Kurzbeschreibung der Zeichnung

Anhand eines in der Zeichnung dargestellten Ausführungsbeispiels wird die Erfindung nachstehend erläutert..

Es zeigt:
- Figur 1: eine Rahmenleiste aus zwei Einzelteilen, die noch nicht ineinander gesteckt sind,
- Figur 2: die Einzelteile nach Figur 1 zusammengesteckt,
- Figur 3: vergrößert eine Steckverbindung in der Draufsicht,
- Figur 4: eine andere mögliche Ausbildung der Steckverbindung in der Draufsicht,
- Figur 5: einen Eckverbinder in der perspektivischen Ansicht,
- Figur 6: eine Ansicht einer Rahmenleiste mit aufgesetztem Eckverbinder,
- Figur 7: einen Außeneckverbinder in der perspektivischen Ansicht,
- Figur 8: eine Rahmenleiste mit dem Eckverbinder nach Figur 7 und
- Figur 9: zwei rechtwinkelig aneinander gefügte Rahmenleisten mit einem Kopfrahmen.

### Ausführung der Erfindung

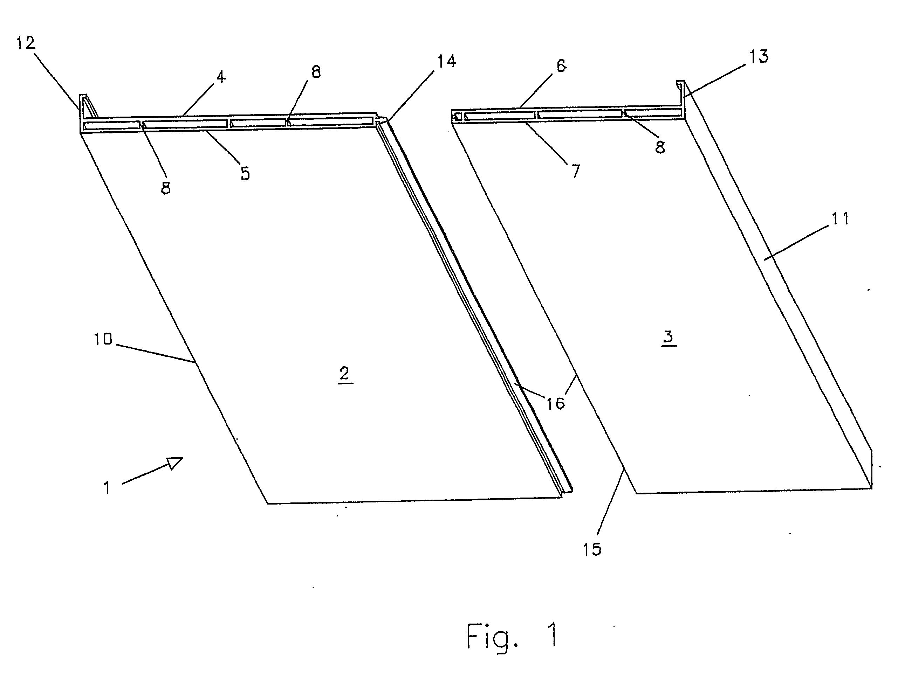

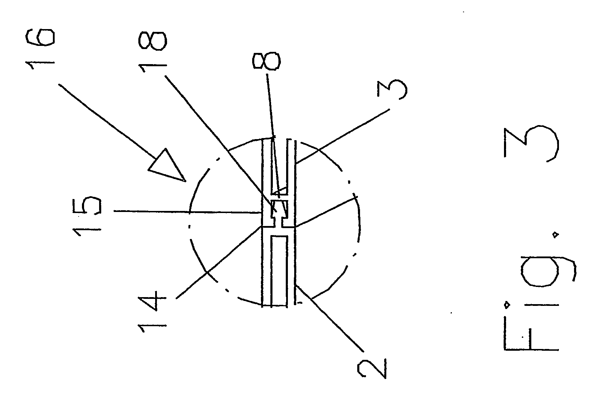

Die in der Figur 1 in der perspektivischen Ansicht von rechts oben gezeigte Rahmenleiste 1 besteht aus den beiden Einzelteilen 2 und 3, die formschlüssig miteinander verbunden werden können. Die Einzelteile 2 und 3 sind doppelwandig ausgebildet. Die Wände 4 und 5 beziehungsweise 6 und 7 sind mit Abstand zueinander angeordnet. Der Abstand der Wände zueinander und auch ihre Stabilität wird durch die Querstege 8 festgelegt beziehungsweise erhöht. An ihren Längsseiten 10, 11 sind die Rahmenleisten 1 mit nach innen gerichteten Abwinkelungen 12, 13 versehen. Die aneinander benachbarten und gegenüberliegenden Anschlussränder 14, 15 der Einzelteile 2, 3 sind so ausgestaltet, dass sie formschlüssig ineinander greifen und zwar im vorliegenden Beispiel als Steckverbindung 16. Diese Steckverbindung 16 ist in der Figur 3 näher beschrieben.

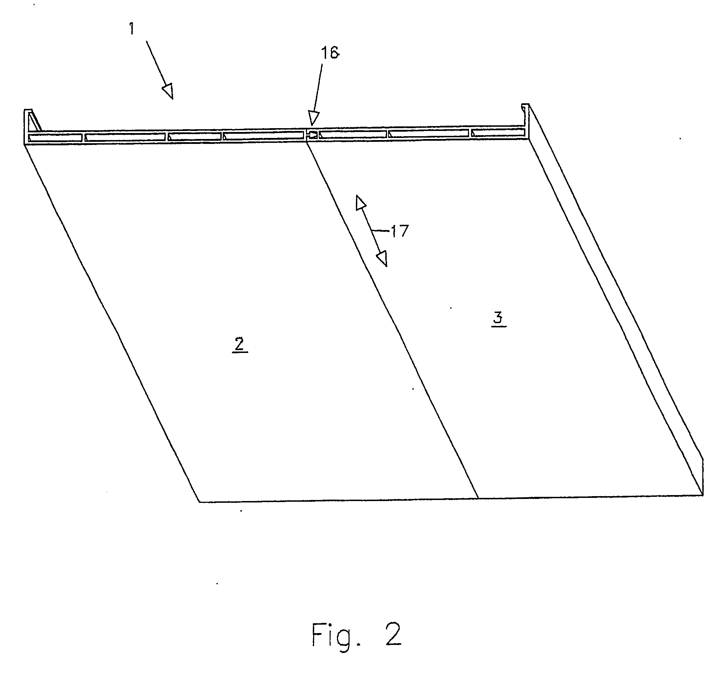

Die Figur 2 zeigt die beiden Einzelteile 2 und 3 durch die Steckverbindung 16 miteinander verbunden. Eine Rahmenleiste 1 ist damit für die weitere Herstellung des Gesamtrahmens vorbereitet. Das ineinander stecken der Einzelteile 2, 3 erfolgt entweder wie mit dem Pfeil 17 angezeigt durch stirnseitiges Ansetzen der beiden Einzelteile 2, 3 und dann ihr verschieben in Längsrichtung oder durch Zusammendrücken senkrecht zu der mit Pfeil 17 angegebenen Richtung.

In der Figur 3 ist vergrößert die Ausgestaltung der Steckverbindung 16 in der Stirnansicht der beiden Einzelteile 2 und 3 gezeigt. Die Steckverbindung 16 ist nut- und federartig ausgebildet. Das Einzelteil 2 ist an seinem Anschlussrand 14 mit der Leiste 18 versehen, die formschlüssig in die am gegenüberliegenden Anschlussrand 15 eingebrachte beziehungsweise von den beiden Wänden des Einzelteils 3 und dem Quersteg 8 gebildeten Nut eingeschoben. Die Leiste 18 ist so ausgestaltet, dass sie formschlüssig zwischen die Wände des Einzelteils 3 passt und am Quersteg 8 anliegt.

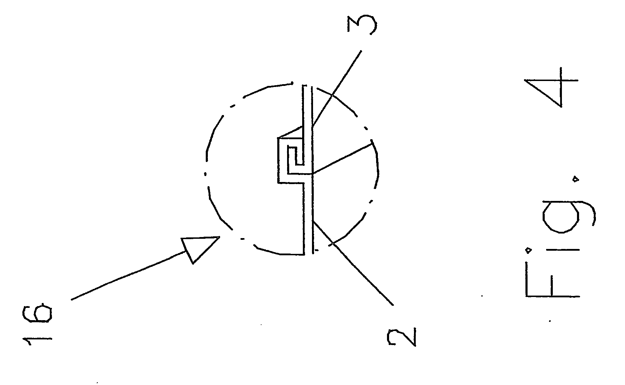

In der Figur 4 ist nur beispielsweise eine Möglichkeit gezeigt, wie eine Steckverbindung 16 aussehen kann, wenn die Einzelteile 2, 3 einwandig ausgebildet sind. Hier kann eine hakenförmig ineinander greifende Ausgestaltung der Anschlussränder 14, 15 der Einzelteile 2, 3 vorgenommen werden und diese ineinander gesteckt werden.

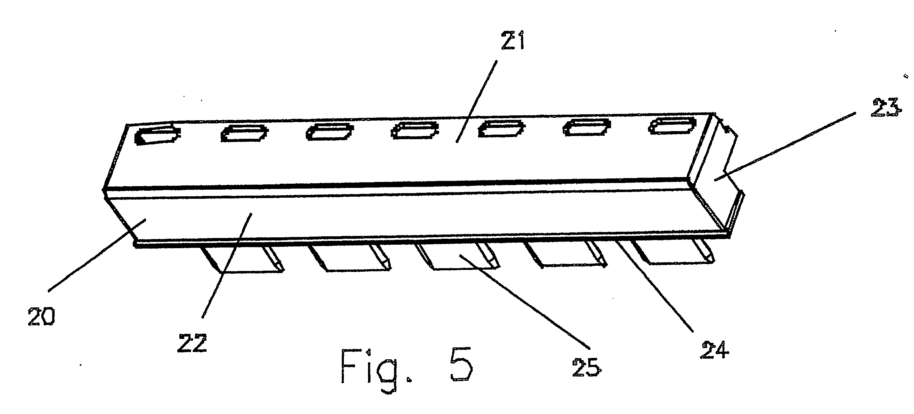

Die Figur 5 zeigt einen Eckverbinder 20 in der Schrägansicht von oben. Der Eckverbinder 20 besteht aus einem winkelförmigen Teil, aus den zwei Flächen 21 und 22. Beide Wände 21 und 22 sind stirnseitig durch Ansätze 23 abgeschlossen. Die Wand 22 hat an ihrer Aussenkante 24 vorstehende Zungen 25, welche in die Zwischenräume der Wände 4 bis 7 eingesteckt werden können. Die Zungen 25 liegen eingesteckt satt an den Wänden 4 bis 7 und angehörigen Querstegen an.

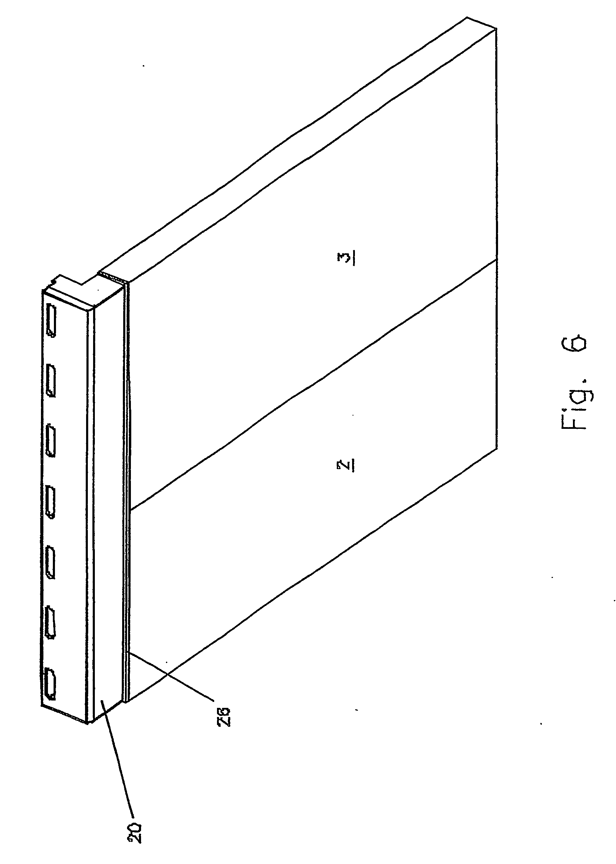

In der Figur 6 sind die zwei Einzelteile 2 und 3 mit aufgestecktem Eckverbinder 20 dargestellt. Der Eckverbinder 20 ist in seinen Außenabmessungen geringfügig kleiner gehalten als die Außenabmessungen der Einzelteile 2, 3. Dieses wird sichtbar durch den Rand 26, welcher bei einem Aufstecken des Eckverbinders 20 auf die Einzelteile 2, 3 entsteht. Der Eckverbinder 20 ist nicht geteilt und hält dadurch, dass seine Zungen 25 mit den Wänden 4 bis 7 der Einzelteile 2, 3 und den Stegen 8 der Einzelteile 2, 3 aneinander anliegen, die Einzelteile 2, 3 fest zusammen.

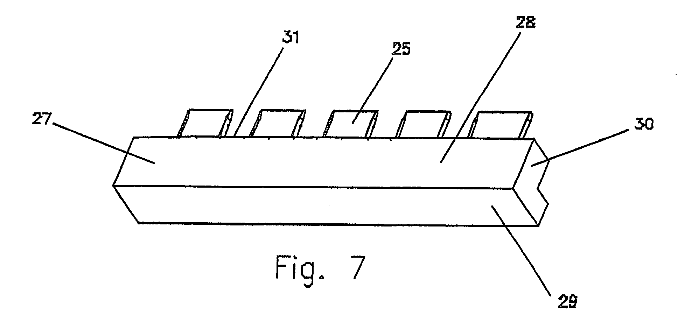

Der in Figur 7 gezeigte Eckverbinder 27 besteht ebenfalls aus zwei Wänden 28, 29, die rechtwinkelig zueinander liegen und an der Seite durch die Abschlusskappen 30 abgeschlossen sind. Die Zungen 25 sind am Außenrand 31 der Wand 28 angebracht. Die Zungen 25 greifen in die Räume zwischen den Wänden 4 bis 7 und die Stege 8 der Einzelteile 2 und 3 ein.

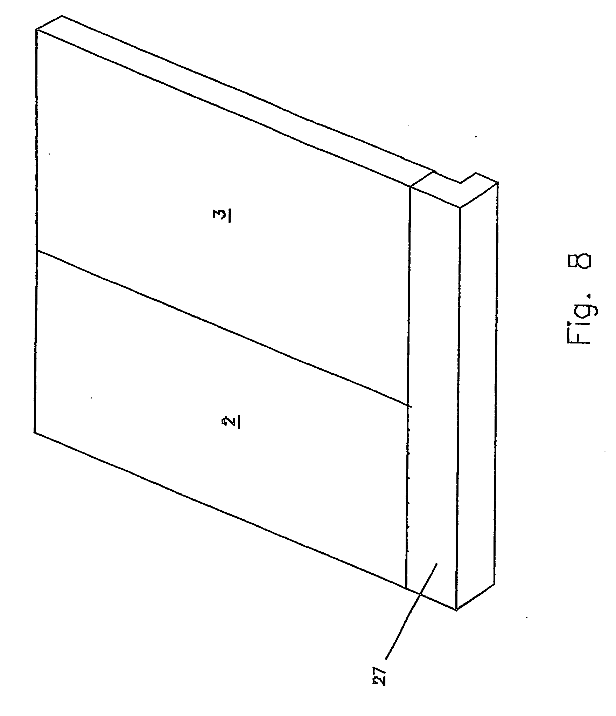

In der Figur 8 sind, ebenfalls in der Seitenansicht, die zusammengefügten Einzelteile 2, 3 mit dem Eckverbinder 27 gezeigt. Der Eckverbinder 27 entspricht in seinen Außenabmessungen den Abmessungen der Einzelteile 2, 3, so dass die Außenflächen von Eckverbinder 27 und Einzelteilen 2, 3 fluchtend zueinander sind. Die Innenabmessungen des Eckverbinders 27 sind so gewählt, dass der Eckverbinder 27 auf den Eckverbinder 20 aufgesetzt werden kann.

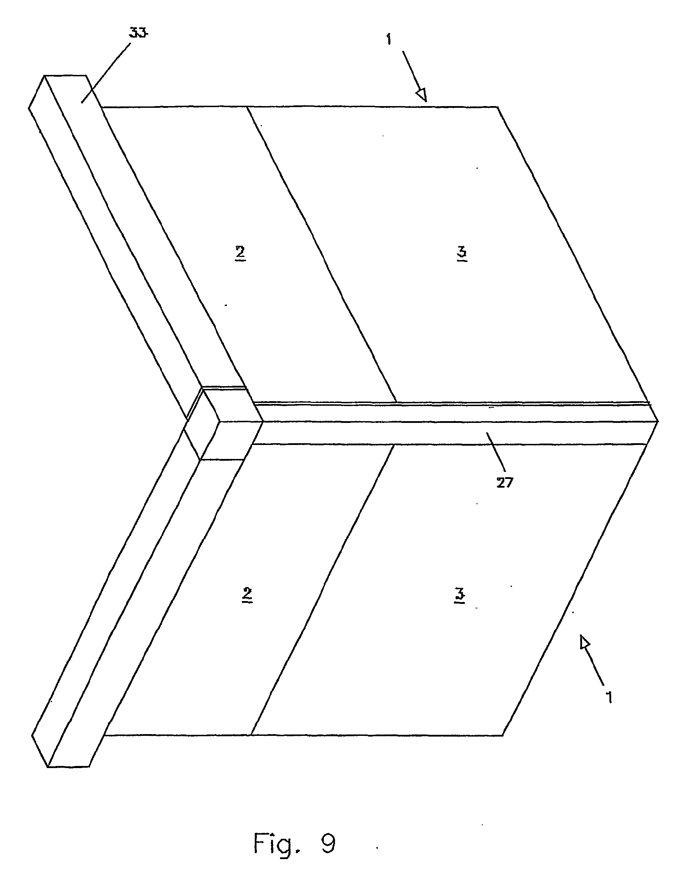

Die Figur 9 zeigt perspektivisch zwei Rahmenleisten 1 jeweils aus zwei Einzelteilen 2 und 3, welche über die Eckverbinder 20, 27 miteinander verbunden sind. Sichtbar ist auf dem Bild lediglich der äußere Eckverbinder 27. An der Stirnseite der beiden Rahmenleisten 1 ist ein sogenannter Kopfrahmen 33 sichtbar, welcher durch entsprechende Ausgestaltung eine Abwinkelung 12 wie sie in Figur 1 gezeigt ist, hergestellt werden kann. Hierfür ist die Abwinkelung 12 entsprechend ausgebildet.

## Patentansprüche

1. Kassettenfilter als Fein- oder Schwebstofffilter zur Reinigung von Gasen, mit einem Rahmen, in den ein oder mehrere von dem Gas durchströmte Faltenpakete aus einem Filtermaterial eingefügt sind, wobei der Rahmen aus Elementen von Rahmenleisten (1) und Elementen von Eckverbindern (20, 27) zusammengesetzt ist, **dadurch gekennzeichnet, daß** die Rahmenleisten (1) aus mindestens zwei Einzelteilen (2, 3) bestehen, die jeweils entlang einer ersten Stirnseite (14, 15) mit einer Steckverbindung (16) und jeweils entlang einer zweiten Stirnseite mit den Eckverbindern (20, 27) zusammengefügt sind.

2. Kassettenfilter nach Anspruch 1, **dadurch gekennzeichnet, dass** die Steckverbindung (16) durch eine nut- und federartige Ausbildung der Stirnseiten (14, 15) zweier benachbarter Einzelteile (2, 3) hergestellt ist.

3. Kassettenfilter nach Anspruch 1, **dadurch gekennzeichnet, dass** die Steckverbindung (16) durch eine hakenförmig ineinander greifende Ausbildung der Stirnseiten (14, 15) zweier benachbarter Einzelteile (2, 3) hergestellt ist.

4. Kassettenfilter nach einem der Ansprüche 1 bis 3, **dadurch gekennzeichnet, dass** die Einzelteile (2, 3) doppelwandig aus zwei mit Abstand zueinander liegenden Wänden (4 bis 7) gebildet sind.

5. Kassettenfilter nach Anspruch 4; **dadurch gekennzeichnet, dass** die Wände (4 bis 7) der Einzelteile (2, 3) durch längs der Einzelteile (2, 3) verlaufende Querstege (8) miteinander verbunden sind.

6. Kassettenfilter nach einem der Ansprüche 1 bis 5, **dadurch gekennzeichnet, dass** die Eckverbinder (20, 27) mit zwischen die Wände (4 bis 7) der Einzelteile (2, 3) greifende und an den Wänden (4 bis 7) und/oder Querstegen (8) anliegenden Zungen (25) versehen sind.

7. Kassettenfilter nach einem der Ansprüche 1 bis 6, **dadurch gekennzeichnet, dass** die Eckverbinder (20, 27) paarweise ineinander steckbar sind.

8. Kassettenfilter nach einem der Ansprüche 1 bis 7, **dadurch gekennzeichnet, dass** die Rahmenleisten (1) an ihren Längsseiten (10, 11) mit nach innen gerichteten Abwinkelungen (12, 13) versehen sind.

9. Kassettenfilter nach einem der Ansprüche 1 bis 8, **dadurch gekennzeichnet, dass** die Einzelteile (2, 3) aus abgelängten Teilstücken eines endlos gefertigten Strangprofils gefertigt werden können.

## Claims

1. Cartridge filter in the form of a fine filter or high-efficiency air filter for purifying gases, having a frame, into which one or more folded packages made of a filter material and through which the gas flows are inserted, wherein the frame is composed of frame strip elements (1) and corner connector elements (20, 27), **characterized in that** the frame strips (1) consist of at least two individual parts (2, 3), which are joined together in each case along a first end side (14, 15) by a plug connection (16) and in each case along a second end side by the corner connectors (20, 27).

2. Cartridge filter according to Claim 1, **characterized in that** the plug connection (16) is produced by forming the end sides (14, 15) of two adjacent individual parts (2, 3) in the manner of a tongue and groove.

3. Cartridge filter according to Claim 1, **characterized in that** the plug connection (16) is produced by forming the end sides (14, 15) of two adjacent individual parts (2, 3) such that they engage in one another in the form of hooks.

4. Cartridge filter according to one of Claims 1 to 3, **characterized in that** the individual parts (2, 3) are formed in a double-walled manner from two walls (4 to 7) spaced apart from one another.

5. Cartridge filter according to Claim 4, **characterized in that** the walls (4 to 7) of the individual parts (2, 3) are connected together by crosspieces (8) running along the individual parts (2, 3).

6. Cartridge filter according to one of Claims 1 to 5, **characterized in that** the corner connectors (20, 27) are provided with tongues (25) engaging between the walls (4 to 7) of the individual parts (2, 3) and bearing against the walls (4 to 7) and/or crosspieces (8) .

7. Cartridge filter according to one of Claims 1 to 6, **characterized in that** the corner connectors (20, 27) can be plugged into one another in pairs.

8. Cartridge filter according to one of Claims 1 to 7, **characterized in that** the longitudinal sides (10, 11) of the frame strips (1) are provided with inwardly directed angled portions (12, 13).

9. Cartridge filter according to one of Claims 1 to 8, **characterized in that** the individual parts (2, 3) can be manufactured from cut-to-length pieces of a continuously manufactured extruded profile.

## Revendications

1. Filtre à air cellulaire sous forme de filtre pour matières fines ou en suspension pour l'épuration de gaz, avec un cadre dans lequel est/sont inséré(s) un ou plusieurs paquets de plis en une matière de filtre traversés par le gaz, dans lequel le cadre est composé d'éléments de plaques de cadre (1) et d'éléments de connecteurs d'angle (20, 27), **caractérisé en ce que** les plaques de cadre (1) se composent d'au moins deux pièces individuelles (2, 3), qui sont assemblées l'une à l'autre respectivement le long d'une première face frontale (14, 15) au moyen d'un assemblage par emboîtement (16) et respectivement le long d'une deuxième face frontale au moyen des connecteurs d'angle (20, 27).

2. Filtre à air cellulaire selon la revendication 1, **caractérisé en ce que** l'assemblage par emboîtement (16) est réalisé par une configuration du type rainure et languette des faces frontales (14, 15) de deux pièces individuelles voisines (2, 3).

3. Filtre à air cellulaire selon la revendication 1, **caractérisé en ce que** l'assemblage par emboîtement (16) est réalisé par une configuration s'engageant l'une dans l'autre en forme de crochet des faces frontales (14, 15) de deux pièces individuelles voisines (2, 3).

4. Filtre à air cellulaire selon l'une quelconque des revendications 1 à 3, **caractérisé en ce que** les pièces individuelles (2, 3) sont réalisées à double paroi à partir de deux parois (4 à 7) agencées à distance l'une de l'autre.

5. Filtre à air cellulaire selon la revendication 4, **caractérisé en ce que** les parois (4 à 7) des pièces individuelles (2, 3) sont assemblées l'une à l'autre par des nervures transversales (8) s'étendant le long des pièces individuelles (2, 3).

6. Filtre à air cellulaire selon l'une quelconque des revendications 1 à 5, **caractérisé en ce que** les connecteurs d'angle (20, 27) sont munis de languettes (25) s'engageant entre les parois (4 à 7) des pièces individuelles (2, 3) et s'appliquant sur les parois (4 à 7) et/ou les nervures transversales (8).

7. Filtre à air cellulaire selon l'une quelconque des revendications 1 à 6, **caractérisé en ce que** les connecteurs d'angle (20, 27) peuvent s'emboîter l'un dans l'autre par paires.

8. Filtre à air cellulaire selon l'une quelconque des revendications 1 à 7, **caractérisé en ce que** les plaques de cadre (1) sont munies sur leurs faces longitudinales (10, 11) de rebords (12, 13) dirigés vers l'intérieur.

9. Filtre à air cellulaire selon l'une quelconque des revendications 1 à 8, **caractérisé en ce que** les pièces individuelles (2, 3) peuvent être fabriquées à partir de pièces partielles coupées à longueur d'un profilé extrudé fabriqué sans fin.
